# EUROPÄISCHE PATENTSCHRIFT

(11) **EP 2 246 756 B1**
(45) Veröffentlichungstag und Bekanntmachung des Hinweises auf die Patenterteilung: **06.03.2019**
(21) Anmeldenummer: 09006007.0
(22) Anmeldetag: 30.04.2009
(51) Int. Cl.: G05B 19/042

(54) **Verfahren und Bediengerät zum Bedienen einer sicherheitsgerichteten industriellen Automatisierungskomponente**
Method and operating device for operating a security-oriented industrial automation component
Procédé et appareil de commande destinés à commander un composant d'automatisation industriel lié à la sécurité

(43) Veröffentlichungstag der Anmeldung: 03.11.2010
(73) Patentinhaber: Siemens Aktiengesellschaft, 80333 München (DE)
(72) Erfinder: Taschke, Ulrich, 90475 Nürnberg (DE); Witte, Karl-Hermann, 90482 Nürnberg (DE)

(56) Entgegenhaltungen:
- EP-A- 1 128 241
- EP-A- 1 306 735
- EP-A- 2 012 201
- DE-A1- 4 441 070
- US-B1- 6 243 629

## Beschreibung

Die Erfindung betrifft ein Verfahren zum Bedienen einer sicherheitsgerichteten industriellen Automatisierungskomponente gemäß dem Oberbegriff des Patentanspruchs 1, und ein Bediengerät für eine sicherheitsgerichtete industrielle Automatisierungskomponente gemäß dem Oberbegriff des Patentanspruchs 5. Bei industriellen Automatisierungskomponenten, die häufig auch als "CPU", "Controller" o.ä. bezeichnet werden, wird zwischen herkömmlichen und sog. fehlersicheren Automatisierungskomponenten unterschieden. Letztgenannte werden kurz auch als "F-CPU's" bezeichnet. Fehlersichere Automatisierungskomponenten kommen überall dort zum Einsatz, wo bei einem Ausfall oder bei einer Fehlfunktion die Gesundheit oder das Leben von Menschen (oder Tieren) beeinträchtigt sein können oder ein hoher Umwelt- oder materieller Schaden droht. Solche fehlersicheren Systeme und Steuerungen basieren regelmäßig auf einer Hardware-Architektur, bei der die wichtigsten Komponenten redundant (doppelt) ausgeführt sind. Weiterhin muss bei solchen Komponenten auch hinsichtlich der Software sichergestellt sein, dass diese den gestellten Sicherheitsanforderungen entspricht.
In den fehlersicheren industriellen Automatisierungskomponenten werden regelmäßig eine Vielzahl von Parametern mit zugeordneten Werten ("Daten") vorgehalten, die durch andere Automatisierungskomponenten, insbesondere Bediengeräte, im laufenden Betrieb geändert werden müssen. Diese Bediengeräte, die häufig selbst keine fehlersicheren Komponenten sind, kommunizieren dazu mit den fehlersicheren Automatisierungskomponenten. Dabei können sowohl in den "nicht-fehlersicheren" Bediengerät als auch auf der Kommunikationsstrecke zwischen dem Bediengerät und der fehlersicheren Automatisierungskomponente Fehler auftreten, die die zu übertragenden Daten, also die Informationen, die zu einer Änderung der Werte der Parameter in der industriellen Automatisierungskomponente führen, derart beeinflussen, dass sich fehlerhafte Werte für die Parameter der fehlersicheren Automatisierungskomponente ergeben.

Die Druckschrift EP 1 128 241 A2 - Horn "Verfahren und Vorrichtung zur Sicherheitsüberwachung einer Steuereinrichtung" zeigt ein Verfahren und eine Vorrichtung, mit der eine Automatisierungskomponente überwacht werden kann. Dabei werden sowohl einer lokalen als auch einer zentralen Überwachungseinrichtung dieselben Eingangsdaten zu einer Verarbeitung zu Ausgangsdaten zugeleitet, wobei beide Verarbeitungsergebnisse (Ausgangsdaten) miteinander verglichen werden. Die Funktion der lokalen Überwachungseinrichtung und damit der zu überwachenden Automatisierungskomponente wird dann angenommen, wenn beide Ergebnisse zumindest teilweise übereinstimmen.

Ein besonderer Aufwand bei der Bedienung von fehlersicheren Automatisierungskomponenten, also insbesondere der Eingabe und Änderung von Werten, Parametern und Anweisungen, besteht darin, dass eine nach den gleichen Sicherheitsmaßstäben aufgebaute Bedienstation ("F-Bediengerät") vorgesehen werden muss und überdies eine ebensolche sichere Datenübertragung zwischen einer solchen Bedienstation und der fehlersicheren Automatisierungskomponente vorgesehen werden muss.

Es ist also eine Aufgabe der vorliegenden Erfindung, ein Bediengerät und ein Verfahren für eine industrielle Automatisierungsanordnung anzugeben, das mit standardisierten Mitteln eine sichere Übertragung der zu ändernden Werte für die Parameter der industriellen Automatisierungskomponente gewährleistet.

Es ist ein Kerngedanke der vorliegenden Erfindung, in einem Bediengerät, welches der fehlersicheren industriellen Automatisierungskomponente zugeordnet ist, neben der Benutzeroberfläche ("Faceplate"), welche die Eingabe neuer Werte, Parameter oder sonstiger Bedienungen für die Automatisierungskomponente ermöglicht, eine zweite, davon unabhängige Einheit vorzusehen, welche eine zweite Benutzeroberfläche vorsieht, mittels derer ein Benutzer die zuvor getätigten Eingaben bzw. Änderungen bestätigt. Dabei ist vorgesehen, dass die derart bestätigten Eingaben bzw. Änderungen (allgemein: Bedienungen) in einen Prüfwert umgesetzt werden, welcher an die fehlersichere Automatisierungskomponente übermittelt und dort mit einem weiteren Prüfwert verglichen wird, welcher seitens der Automatisierungskomponente aus den zuvor empfangenen Eingaben bzw. Änderungen (Bedienungen) errechnet wurde. Dabei sollen erfindungsgemäß nur dann die Eingaben in der Automatisierungskomponente wirksam werden, wenn beide Prüfwerte übereinstimmen.

Die Lösung der Aufgabe sieht insbesondere ein Verfahren zum Bedienen einer sicherheitsgerichteten industriellen Automatisierungskomponente durch ein Bediengerät vor, wobei das Bediengerät mittels einer Datenverbindung mit der Automatisierungskomponente verbunden ist, wobei in einem ersten Schritt durch einen Benutzer an einer ersten Benutzeroberfläche eine Eingabe an dem Bediengerät getätigt und ein Resultat der Eingabe durch das Bediengerät an die Automatisierungskomponente übermittelt wird. In einem zweiten Schritt wird das Resultat der Eingabe in der Automatisierungskomponente zur Berechnung eines ersten Prüfwertes verwendet, und in einem dritten Schritt wird die Eingabe in dem Bediengerät in eine Statusanzeige umgesetzt und an einer zweiten Benuteroberfläche ausgegeben. In einem vierten Schritt wird von einem oder dem Benutzer die Statusanzeige durch Eingabe einer Bestätigung quittiert, wonach in einem fünften Schritt in dem Bediengerät aus der Statusanzeige und der Bestätigung eine zweiter Prüfwert gebildet und an die Automatisierungskomponente übermittelt wird. In einem sechsten Schritt wird schließlich in der Automatisierungskomponente der erste mit dem zweiten Prüfwert verglichen, und das Resultat der Eingabe wird im Fall eines positiven Vergleichs in der Automatisierungskomponente angewendet. Die Absicherung des Zugriffs auf die Automatisierungskomponente auf Basis der Anzeigen und Eingaben im Rahmen einer Bestätigung (Quittierung) ermöglicht die flexible Projektierung von Bedienfunktionen in einem Bediengerät mit standardisierten Mitteln. Daraus ergibt sich der Vorteil, dass für das Bediengerät selbst keine sicherheitsgerichtete Komponente verwendet werden muss, sondern dass für das Bediengerät und für die Datenübertragung zwischen dem Bediengerät und der sicherheitsgerichteten industriellen Automatisierungskomponente dem Standard entsprechende Mittel und Verfahren verwendet werden können. Der Aufwand für die Erstellung und Programmierung einer sicherheitsgerichteten (redundanten, ausfallsicheren und zertifizierten) Bedienstation und einer eben solchen Datenübertragung kann entfallen. Ein besonderer Vorteil besteht darin, dass somit abgesichert ist, dass genau diejenige Information zur Anwendung gelangt, die auch durch den zweiten Dialog (dritter und vierter Schritt) angezeigt und mit diesem bestätigt wurde. Es gilt das Prinzip "what you see is what you get" - "Sie bekommen, was Sie sehen".

Zur Lösung der Aufgabe wird außerdem ein Bediengerät für eine sicherheitsgerichtete industrielle Automatisierungskomponente vorgeschlagen, wobei das Bediengerät zur Durchführung eines der vorgenannten Verfahren eine erste Benutzeroberfläche zur Durchführung des ersten Schrittes und eine Umsetzungseinheit und eine zweite Benutzeroberfläche zur Durchführung des dritten und vierten Schrittes umfasst. Weiter ist eine Recheneinheit zur Durchführung des fünften Schrittes vorgesehen. Ein solches Bediengerät kann mit standardisierten Mitteln aufgebaut werden, ohne dass der erhöhte Aufwand für ein sicherheitsgerichtetes technisches Konzept verfolgt werden muss. Mittels eines solchen Bediengerätes lassen sich auf sichere Art und Weise Anweisungen, Werte, Wert-Änderungen o.ä. für eine sicherheitsgerichtete industrielle Automatisierungskomponente eingeben, bestätigen und übertragen.

Vorteilhafte Ausgestaltungen des erfindungsgemäßen Verfahrens sind in den abhängigen Patentansprüchen angegeben. Die in diesem Zusammenhang erwähnten Merkmale und deren Vorteile gelten sinngemäß auch für das erfindungsgemäße Bediengerät.

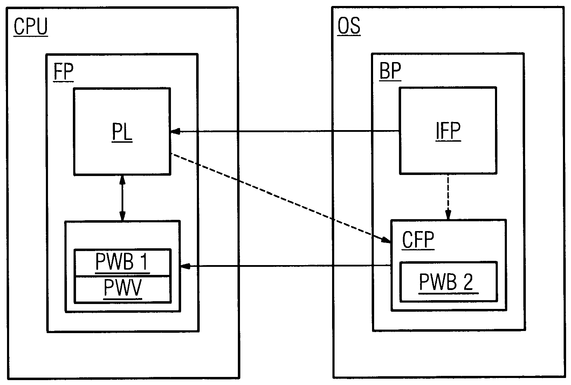

Vorteilhaft werden an der ersten Benutzeroberfläche in einem Bedienschritt mehrere Eingaben getätigt, wobei in dem Bediengerät aus diesen mehreren Eingaben mehrere zweite Prüfwerte und in der Automatisierungskomponente aus den Resultaten der Eingaben mehrere erste Prüfwerte gebildet werden, wobei die mehreren ersten Prüfwerte zu einem ersten Gesamt-Prüfwert und die mehreren zweiten Prüfwerte zu einem zweiten Gesamt-Prüfwert zusammengefasst werden und wobei in dem sechsten Schritt der erste Gesamt-Prüfwert und der zweite Gesamt-Prüfwert als erster und als zweiter Prüfwert miteinander verglichen werden.
Eine besonders sichere Programmierung ergibt sich, wenn der erste und der zweite Prüfwert jeweils anhand unterschiedlicher Rechenvorschriften (Programme) errechnet werden, die jedoch bei gleichem Prüfinhalt zu demselben Prüfwert gelangen, also diesbezüglich gleichwirkend sind.
Für die Ausgabe der Statusanzeige in dem dritten Schritt können entweder Eingaben herangezogen werden, die direkt durch die erste Benutzeroberfläche innerhalb des Bediengerätes zu der zweiten Benutzeroberfläche übermittelt werden, oder aber in einer alternativen Ausführungsform die Eingaben, die von der Automatisierungskomponente im ersten Schritt empfangen und dann an das Bediengerät zurück übermittelt wurden. Während im ersteren Fall eine schnellere und einfachere Übertragung dieser Eingabe und Daten erreicht werden kann, kann durch das an zweiter Stelle geschilderte Vorgehen die Sicherheit weiter erhöht werden, weil dabei auch Fehler in der Datenübertragung des ersten Schrittes mit einer höheren Wahrscheinlichkeit aufgedeckt werden können.
Ausführungsbeispiele für das erfindungsgemäße Verfahren werden nachfolgend anhand der Zeichnung erläutert. Sie dienen gleichzeitig der Erläuterung eines Ausführungsbeispiels für ein erfindungsgemäßes Bediengerät.
Dabei zeigt die einzige Figur in schematischer Darstellung eine fehlersichere industrielle Automatisierungskomponente und ein zugeordnetes Bediengerät.

In der Figur ist die sicherheitsgerichtete ("fehlersichere") industrielle Automatisierungskomponente CPU schematisch dargestellt, die über ein (nicht dargestelltes) Informationsnetzwerk mit dem Bediengerät OS ("Operation Station") verbunden ist. Die Automatisierungskomponente CPU ist mit einer sicherheitsgerichteten Software FP ("Failsafe Program") ausgestattet, die eine Parameterliste PL umfasst. Die Parameterliste PL umfasst Variablen, Konstanten, Informationen über Einstellungen etc., also alle diejenigen Informationen, die von dem Bediengerät OS eingegeben, abgerufen und geändert werden sollen. Neben der Parameterliste PL umfasst die Software FP einen weiteren Funktionsblock mit den Modulen PWB1 und PWV (Prüfwertberechnung 1 und Prüfwertvergleich).

Das Bediengerät OS ist im vorliegenden Ausführungsbeispiel nicht bzw. nicht notwendig als sicherheitsgerichtete Komponente aufgebaut, d.h., dass im Gegensatz zu der Automatisierungskomponente CPU keine besonderen Maßnahmen bezüglich Ausfallsicherheit, Zertifizierung, Redundanz o.ä. getroffen worden sind bzw. getroffen werden müssen. Das Bediengerät OS umfasst - neben anderen, hier nicht relevanten und daher hier nicht dargestellten Einrichtungen - das Bedienprogramm BP, welches die zur Bedienung der Automatisierungskomponente CPU erforderlichen Benutzeroberflächen bereitstellt, die Kommunikation mit der Automatisierungskomponente CPU gewährleistet und seitens des Bediengerätes OS die sichere Erfassung und Übertragung von Eingaben bzw. den daraus resultierenden Werten, Wert-Änderungen oder anderer Bedienungen für die Software FP gewährleistet. Dazu werden Eingaben, also i.d.R. Tastatur-Eingaben, "Mouse-Klicks" oder andere sog. "GUI-Events", in sog. Resultate umgesetzt, also meist binäre codierte Informationen zur Änderung des Wertes eines oder mehrerer Parameter der Automatisierungskomponente CPU.

Das Bedienprogramm BP umfasst dazu einen ersten Funktionsblock IFP ("Initiator-Faceplate") mit einer ersten Benutzeroberfläche, und einen zweiten Funktionsblock CFP ("Confirmer-Faceplate") zur Realisierung einer zweiten Benutzeroberfläche und mit dem Modul PWB2 ("Prüfwertberechnung 2") zur Bediengeräte-seitigen Berechnung eines Prüfwertes.

Die Module PWB1 und PWB2 verwenden zur Berechnung der jeweiligen Prüfwerte miteinander kompatible oder sogar identische Algorithmen, d.h., dass bei Zugrundelegung derselben Eingabe bzw. resultierenden Werten oder Wert-Änderungen beide Module denselben Prüfwert errechnen. Für den Aufbau des Bedienprogramms BP können dabei standardisierte Komponenten verwendet werden.

Durch den modularen Aufbau der Software FP kann bei Änderungen von Datentypen und Parametern oft auf bestehende Komponenten zurückgegriffen werden, so dass sich Vereinfachungen bei einer Zertifizierung der sicherheitsgerichteten Automatisierungskomponente CPU bzw. der Software FP ergeben.

Im Folgenden wird zur Erläuterung des erfindungsgemäßen Verfahrens erläutert, wie ein Wert für einen Parameter der Parameterliste PL an dem Bediengerät eingegeben und dessen korrekte Eingabe und Übertragung sichergestellt wird. Dazu gibt ein Benutzer an einer ersten Benutzeroberfläche der Programmkomponente IFP den neuen Wert für den Parameter ein, indem er ein übliches GUI-Element (GUI = Graphical User Interface) bedient. Als Resultat der Eingabe des Benutzers wird nun durch das Bediengerät, genauer: eine Kommunikations-Routine der Komponente IFP, ein binär codierter Wert bzw. Wert-Änderung (ein sog. "Delta") oder eine Anweisung an die Automatisierungskomponente CPU übertragen und durch eine dortige Programmroutine zwischengespeichert. Das Resultat wird nun mittels einer weiteren Datenübertragung von der Automatisierungskomponente CPU zu dem Bediengerät OS zurück übertragen und dort durch die zweite Benutzeroberfläche des Moduls CFP dargestellt. In einer alternativen Ausführungsform kann das Resultat der Eingabe jedoch auch direkt von dem Funktionsblock IFP zu dem Funktionsblock CFP übertragen werden. Beide Alternative sind in der Figur anhand gestrichelter Pfeile dargestellt.

Mittels der zweiten Benutzeroberfläche und mittels dort angeordneter GUI-Elemente bestätigt nun der Benutzer, dass er das dort visualisierte Resultat der ursprünglichen Eingabe, also in diesem Beispiel den neuen Wert für den zu bearbeitenden Parameter, tatsächlich in der Automatisierungskomponente CPU aktivieren bzw. "freigeben" möchte. Diese Bestätigung kann optional auch durch Eingabe einer PIN, einer elektronischen Signatur o.ä. autorisiert werden. Aus dem angezeigten und bestätigten Wert und ggf. auch aus der eingegebenen PIN bzw. der elektronischen Signatur wird nun mittels des Moduls PWB2 ein Prüfwert errechnet und an die Komponente PWV der Automatisierungskomponente CPU übertragen und dort gespeichert. Analog zu dieser Berechnung des Prüfwertes wird aus dem zwischengespeicherten Wert, der in dem ersten Schritt zu der Automatisierungskomponente CPU übertragen wurde, durch das Modul PWB1 ebenfalls einen Prüfwert errechnet (sog. erster Prüferwert) und mit dem seitens des Bediengerätes OS errechneten Prüfwert (sog. zweiter Prüfwert) verglichen. Im Falle eines positiven Vergleichs wird der zwischengespeicherte Wert in die Parameterliste PL übernommen und kann fortan in der Automatisierungskomponente CPU verwendet werden.

Das zuvor geschilderte Verfahren muss nicht zwingend für jeden geänderten Wert bzw. für jede einzelne Eingabe/Bedienung separat durchgeführt werden; es ist auch möglich, mittels eines einzigen Verfahrensdurchlaufs mehrere Eingaben, Werte, Parameter, Befehle etc. auch unterschiedlichen Typs zu verarbeiten.

## Patentansprüche

1. Verfahren zum Bedienen einer sicherheitsgerichteten industriellen Automatisierungskomponente (CPU) durch ein Bediengerät (OS),
wobei das Bediengerät (OS) mittels einer Datenverbindung mit der Automatisierungskomponente (CPU) verbunden ist,
wobei
- in einem ersten Schritt durch einen Benutzer an einer ersten Benutzeroberfläche eine Eingabe an dem Bediengerät (OS) getätigt und ein Resultat der Eingabe durch das Bediengerät (OS) an die Automatisierungskomponente (CPU) übermittelt wird,
- in einem zweiten Schritt das Resultat der Eingabe in der Automatisierungskomponente (CPU) zur Berechnung eines ersten Prüfwertes verwendet wird,
- in einem dritten Schritt die Eingabe in dem Bediengerät (OS) in eine Statusanzeige umgesetzt und an einer zweiten Benuteroberfläche ausgegeben wird,
- in einem vierten Schritt von einem oder dem Benutzer die Statusanzeige durch Eingabe einer Bestätigung quittiert wird,
- in einem fünften Schritt in dem Bediengerät (OS) aus der Statusanzeige und der Bestätigung ein zweiter Prüfwert gebildet und an die Automatisierungskomponente (CPU) übermittelt wird, und
- in einem sechsten Schritt in der Automatisierungskomponente der erste und der zweite Prüfwert verglichen werden und das Resultat der Eingabe im Fall eines positiven Vergleichs angewendet wird.
- **dadurch gekennzeichnet,**
**dass** an der ersten Benutzeroberfläche in einem Bedienschritt mehrere Eingaben getätigt werden, wobei in dem Bediengerät (OS) aus diesen mehreren Eingaben mehrere zweite Prüfwerte und in der Automatisierungskomponente (CPU) aus den Resultaten der Eingaben mehrere erste Prüfwerte gebildet werden, wobei die mehreren ersten Prüfwerte zu einem ersten Gesamt-Prüfwert und die mehreren zweiten Prüfwerte zu einem zweiten Gesamt-Prüfwert zusammengefasst werden und
wobei in dem sechsten Schritt der erste Gesamt-Prüfwert und der zweite Gesamt-Prüfwert als erster und als zweiter Prüfwert miteinander verglichen werden.

2. Verfahren nach Patentanspruch 1,
**dadurch gekennzeichnet,**
**dass** der erste und der zweite Prüfwert jeweils anhand unterschiedlicher, jedoch gleichwirkenden Rechenvorschriften errechnet werden.

3. Verfahren nach einem der vorhergehenden Patentansprüche,
**dadurch gekennzeichnet,**
**dass** in dem dritten Schritt die Eingabe innerhalb des Bediengerätes (OS) von der ersten Benutzeroberfläche zu der zweiten Benutzeroberfläche übertragen wird.

4. Verfahren nach einem der Patentansprüche 1 oder 2,
**dadurch gekennzeichnet,**
**dass** in dem dritten Schritt das in dem ersten an die Automatisierungskomponente (CPU) übertragene Resultat der Eingabe von der Automatisierungskomponente (CPU) an das Bediengerät zurück übertragen und in die Status-Anzeige umgesetzt wird.

5. Bediengerät für eine sicherheitsgerichtete industrielle Automatisierungskomponente (CPU) und Automatisierungskomponente (CPU), **dadurch gekennzeichnet,**
**dass** das Bediengerät (OS) und die Automatisierungskomponente (CPU) zur Durchführung eines der vorgenannten Verfahrensansprüche ausgebildet sind und
• einen ersten Funktionsblock (IFP) mit einer ersten Benutzeroberfläche zur Durchführung des ersten Schrittes aufweist,
• einen zweiten Funktionsblock (CFP) mit einer zweiten Benutzeroberfläche zur Durchführung des dritten und vierten Schrittes umfasst, wobei
• der zweite Funktionsblock (CFP) mit einem Modul (PWB2) zur Durchführung des fünften Schrittes ausgestattet ist.

## Claims

1. Method for controlling a safety-oriented industrial automation component (CPU) by means of a controller (OS),
the controller (OS) being connected to the automation component (CPU) by means of a data link,
wherein
- in a first step, a user makes an input to the controller (OS) at a first user interface, and the controller (OS) transmits a result of the input to the automation component (CPU),
- in a second step, the result of the input is used in the automation component (CPU) to calculate a first test value,
- in a third step, the input is converted into a status display in the controller (OS) and is output at a second user interface,
- in a fourth step, a user or the user acknowledges the status display by inputting a confirmation,
- in a fifth step, a second test value is formed from the status display and the confirmation in the controller (OS) and is transmitted to the automation component (CPU), and,
- in a sixth step, the first and second test values are compared in the automation component and the result of the input is used if the comparison is positive,
- **characterized**
**in that** a plurality of inputs are made at the first user interface in a control step, a plurality of second test values being formed from this plurality of inputs in the controller (OS) and a plurality of first test values being formed from the results of the inputs in the automation component (CPU),
the plurality of first test values being combined to form a first total test value and the plurality of second test values being combined to form a second total test value, and,
in the sixth step, the first total test value and the second total test value being compared with one another as the first and second test values.

2. Method according to Patent Claim 1,
**characterized in that**
the first and second test values are each calculated using different calculation rules which, however, have the same effect.

3. Method according to one of the preceding patent claims,
**characterized in that**,
in the third step, the input is transmitted inside the controller (OS) from the first user interface to the second user interface.

4. Method according to one of Patent Claims 1 and 2,
**characterized in that**,
in the third step, the result of the input, which is transmitted to the automation component (CPU) in the first step, is transmitted back to the controller from the automation component (CPU) and is converted into the status display.

5. Controller for a safety-oriented industrial automation component (CPU) and automation component (CPU),
**characterized**
**in that** the controller (OS) and the automation component (CPU) are designed to carry out one of the abovementioned method claims and
• has a first function block (IFP) having a first user interface for carrying out the first step,
• comprises a second function block (CFP) having a second user interface for carrying out the third and fourth steps,
• the second function block (CFP) being provided with a module (PWB2) for carrying out the fifth step.

## Revendications

1. Procédé de commande d'un composant (CPU) d'automatisation industriel de sécurité par un appareil (OS) de commande,
dans lequel l'appareil (OS) de commande est relié au composant (CPU) d'automatisation au moyen d'une liaison de données,
dans lequel
- dans un premier stade, on actionne, par un utilisateur, une entrée sur l'appareil (OS) de commande et on transmet un résultat de l'entrée au composant (CPU) d'automatisation par l'appareil (OS) de commande,
- dans un deuxième stade, on utilise le résultat de l'entrée dans le composant (CPU) d'automatisation pour le calcul d'une première valeur de contrôle,
- dans un troisième stade, on transforme l'entrée, dans l'appareil (OS) de commande, en une indication de statut et on l'émet sur une deuxième surface d'utilisateur,
- dans un quatrième stade, il est, par un ou par l'utilisateur, accusé réception de l'indication de statut par entrée d'une confirmation,
- dans un cinquième stade, on forme, dans l'appareil (OS) de commande, à partir de l'indication de statut et de la confirmation, une deuxième valeur de contrôle et on la transmet au composant (CPU) d'automatisation et
- dans un sixième stade, on compare, dans le composant d'automatisation, la première et la deuxième valeurs de contrôle et on applique le résultat à l'entrée, dans le cas d'une comparaison positive,
- **caractérisé**
**en ce que** l'on actionne, sur la première surface d'utilisateur, dans un stade de commande, plusieurs entrées, dans lequel, dans l'appareil (OS) de commande, on forme, à partir de ces plusieurs entrées, plusieurs deuxièmes valeurs de contrôle et, dans le composant (CPU) d'automatisation, à partir des résultats des entrées, plusieurs premières valeurs de contrôle, les plusieurs premières valeurs de contrôle étant rassemblées en une première valeur de contrôle d'ensemble et les plusieurs deuxièmes valeurs de contrôle en une deuxième valeur de contrôle d'ensemble et
dans lequel, dans le sixième stade, on compare entre elles la première valeur de contrôle d'ensemble et la deuxième valeur de contrôle d'ensemble, comme première et comme deuxième valeurs de contrôle.

2. Procédé suivant la revendication 1,
**caractérisé**
**en ce que** l'on calcule la première et la deuxième valeur de contrôle, respectivement, à l'aide de prescriptions de calcul différentes mais équivalentes.

3. Procédé suivant l'une des revendications précédentes,
**caractérisé**
**en ce que**, dans le troisième stade, on transmet l'entrée, à l'intérieur de l'appareil (OS) de commande, de la première surface d'utilisateur à la deuxième surface d'utilisateur.

4. Procédé suivant l'une des revendications 1 ou 2,
**caractérisé**
**en ce que**, dans le troisième stade, on retransfère, du composant (CPU) d'automatisation à l'appareil de commande, le résultat de l'entrée transmis dans le premier au composant (CPU) d'automatisation et on le transforme en l'indication de statut.

5. Appareil de commande d'un composant (CPU) d'automatisation industriel de sécurité et composant (CPU) d'automatisation,
**caractérisé**
**en ce que** l'appareil (OS) de commande et le composant (CPU) d'automatisation sont constitués pour la mise en oeuvre de l'une des revendications de procédé mentionnées ci-dessus et
• a un premier bloc (IFP) fonctionnel, ayant une première surface d'utilisateur pour effectuer le premier stade,
• comprend un deuxième bloc (CFP) fonctionnel, ayant une deuxième surface d'utilisateur pour effectuer les troisième et quatrième stades, dans lequel
• le deuxième bloc (CFP) fonctionnel est équipé d'un module (PWB2) pour effectuer le cinquième stade.
